# EUROPEAN PATENT APPLICATION

(11) **EP 1 199 462 A2**
(43) Date of publication of application: **24.04.2002**
(21) Application number: 01124986.9
(22) Date of filing: 19.10.2001
(51) Int. Cl.: F02F 3/28

(54) **Internal combustion engine and piston for internal combustion engine**

(30) Priority: 20.10.2000 JP 2000321141
(71) Applicant: YAMAHA HATSUDOKI KABUSHIKI KAISHA, Iwata-shi Shizuoka-ken (JP)
(72) Inventor: Tanaka, Daijirou, Iwata-Shi, Shizuoka-ken (JP); Kurosawa, Shinishi, Iwata-Shi, Shizuoka-ken (JP)
(74) Representative: Grünecker, Kinkeldey, Stockmair & Schwanhäusser Anwaltssozietät

(57) **Abstract**

A piston for an in-cylinder injection engine capable of effecting an increased compression ratio and a higher output without difficulty in layout and smoke generation. Said piston for an in-cylinder injection engine in which intake valves and exhaust valves are provided in a cylinder head and fuel is injected directly into a cylinder from an injector mounted to the cylinder head, is formed integrally, at its top, with a mountain-shaped portion having an intake side slope facing the intake valves and an exhaust side slope facing the exhaust valves. Said mountain-shaped portion is formed integrally at the top of the piston, therefore the volume of the combustion chamber can be decreased without need of changing the configuration of the cylinder head, effecting an increased compression ratio and a higher output without difficulty in layout. In addition, fuel injected from the injector is diffused along the intake side slope of the mountain-shaped portion on the piston, which facilitates evaporation of the fuel, preventing smoke generation.

## Description

This invention relates to an internal combustion engine according to the preamble portion of claim 1 and to a piston for an internal combustion engine according to the preamble portion of claim 12.

Although an in-cylinder injection engine in which fuel is injected directly into a cylinder from an injector mounted to a cylinder head, has the advantage, for example, of effecting a higher output, a lower fuel consumption, improved exhaust characteristics, etc., a prerequisite condition to produce satisfactory results of a higher output is that uniform combustion of mixture is performed in the combustion chamber.

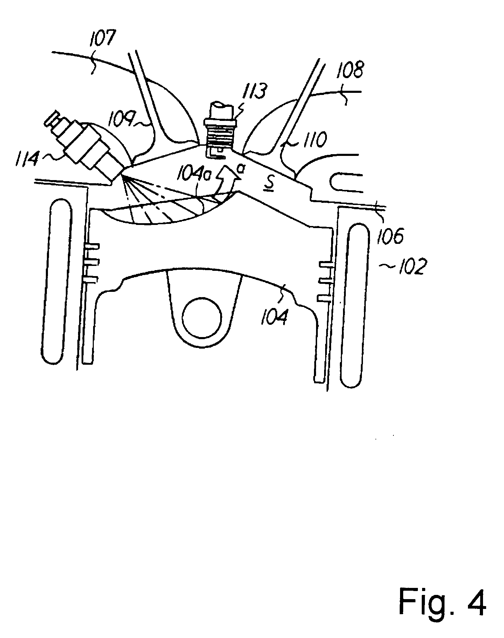

In the in-cylinder injection engine, in order to effect a higher compression ratio, a system has been adopted in which the top of a piston 104 is formed in the shape of a mountain matched to a pent roof type combustion chamber S, as shown in Fig. 4; the piston 104 is formed, at its top, with a cavity 104a; and fuel is injected directly into the cavity 104a of the piston 104 from an injector 114 on the compression stroke to raise the fuel spray in the direction of an arrow a shown in the figure along the surface of the cavity 104a toward an ignition plug 113, so that the fuel spray is ignited for combustion by the ignition plug 113 (for example, refer to Japanese Unexamined Patent Publication Hei 6-81651). In Fig. 4, numeral 102 designates a cylinder block, numeral 106 a cylinder head, numeral 107 an intake passage, numeral 108 an exhaust passage, numeral 109 an intake valve and numeral 110 an exhaust valve.

However, the in-cylinder injection engine with a piston 104 having a cavity 104a formed at its top, poses a problem that fuel injected from the injector 114 concentrates into the cavity 104a of the piston 104 to become excessively rich, resulting in lack of fuel evaporation in the cavity 104a, which is liable to generate smoke.

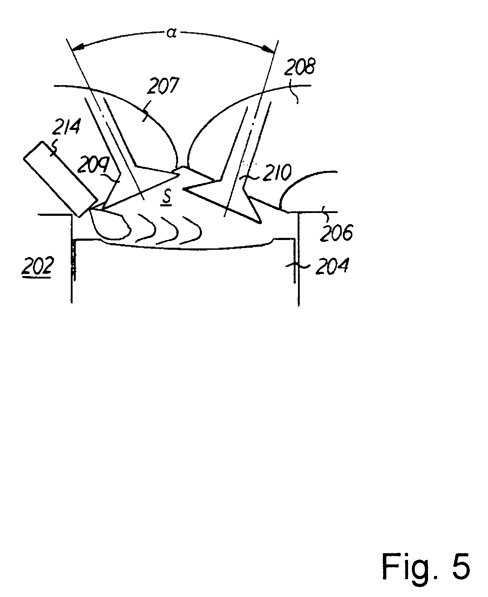

Thus, an in-cylinder injection engine has been suggested, as shown in Fig. 5, in which a piston 204 has approximately a flat top, fuel injection by an injector 214 is started before completion of the exhaust stroke, and injected fuel strikes against the top of the piston 204 to be reflected for direct hit on exhaust valves 210 (refer to Japanese Unexamined Patent Publication Hei 11-324680). According to this Patent Publication, even when an air fuel ratio is rich, evaporation and diffusion of fuel in the combustion chamber S are sufficient, preventing smoke generation. In Fig. 5, numeral 202 designates a cylinder block, numeral 206 a cylinder head, numeral 207 an intake passage, numeral 208 an exhaust passage and numeral 209 an intake valve.

However, in the in-cylinder injection engine shown in Fig. 5, because of a flat top of the piston 204, the volume of the combustion chamber S is increased, so that it is difficult from the viewpoint of layout to raise the compression ratio and effect a higher output. That is, for an increased compression ratio, it is necessary that the volume of the combustion chamber S is decreased on the cylinder head 206 side, for example, by decreasing the angle α contained by intake and exhaust valves 209, 210.

In view of the foregoing, it is an objective of this invention to provide an internal combustion engine as indicated above capable of effecting an increased compression ratio and a higher output without difficulty in layout and smoke generation.

The objective of the present invention is solved by an internal combustion engine having the features of claim 1.

Accordingly, the internal combustion engine according to the present invention comprises a cylinder, a piston slidable in said cylinder and a cylinder head having at least one intake valve, at least one exhaust valve and an injector, wherein said injector is adapted to inject fuel directly into a combustion chamber defined by the cylinder, the piston and the cylinder head, wherein a mountain-shaped portion is formed integrally at a top of said piston and wherein said mountain-shaped portion is comprising an intake side slope facing said intake valve and an exhaust side slope facing said exhaust valve.

Preferred embodiments of the internal combustion engine according to the present invention are laid down in the dependent claims.

It is a further objective of the present invention to provide a piston for an internal combustion engine as indicated above enhancing uniform distribution of the air/fuel-mixture in a combustion chamber of an internal combustion engine.

This further objective of the present invention is solved by a piston for an internal combustion engine having the features of claim 12.

Accordingly, there is provided a piston for an internal combustion engine in which intake valves and exhaust valves are provided in a cylinder head and fuel is injected directly into a cylinder from an injector mounted to the cylinder head, wherein at a top of said piston is formed integrally a mountain-shaped portion with an intake side slope facing said intake valves and an exhaust side slope facing said exhaust valves.

Therefore, a mountain-shaped portion is formed integrally on a piston at its top, therefore the volume of the combustion chamber can be decreased without need of changing the configuration of the cylinder head, effecting an increased compression ratio and a higher output without difficulty in layout. In addition, fuel injected from the injector is diffused along the slope of the mountain-shaped portion of the piston, which facilitates evaporation of the fuel, preventing smoke generation.

According to a preferred embodiment of the invented piston, an angle of the intake side slope of said mountain-shaped portion is set such that its extended plane crosses the faces of said exhaust valves when the piston is at its top dead center so that fuel injected from the injector mounted on the intake side will hit directly on said exhaust valve faces along the intake side slope of said mountain-shaped portion.

Thus, fuel injected from the injector mounted on the intake side is adapted to hit directly on the exhaust valve faces along the intake side slope of the mountain-shaped portion on the top of the piston, so that the fuel is heated by the hot exhaust valve faces, which facilitates its evaporation further, and the exhaust valves are cooled down by the fuel, which improves reliability of the engine.

It is further preferable if a plurality of valve recesses formed in the intake side slope of said mountain-shaped portion are connected by a tangent line.

Thus, a plurality of valve recesses formed in the intake side slope of the mountain-shaped portion on the top of the piston, are connected by a tangent line, so that fuel injected from the injector can be diffused smoothly without interference.

According to another preferred embodiment of the invented piston, a spray guide is formed in an intake side squish area wherein said spray guide is shaped like a recessed groove expanding in width toward the intake side slope of said mountain-shaped portion.

Accordingly, fuel injected from the injector expands toward the intake side slope of the mountain-shaped portion along the spray guide formed in the intake side squish area on the top of the piston, so that the fuel is diffused more smoothly, facilitating fuel evaporation.

In the following, the present invention is explained in greater detail with respect to several embodiments thereof in conjunction with the accompanying drawings, wherein:
- Fig. 1: is a sectional view of a portion of an in-cylinder injection engine with a piston according to this invention;
- Fig. 2: is a plan view of the piston according to this invention;
- Fig. 3: is a sectional view taken along line A-A of Fig. 2;
- Fig. 4: is a sectional view of a portion of an in-cylinder injection engine with a conventional piston; and
- Fig. 5: is a sectional view of a portion of another in-cylinder injection engine with a conventional piston.

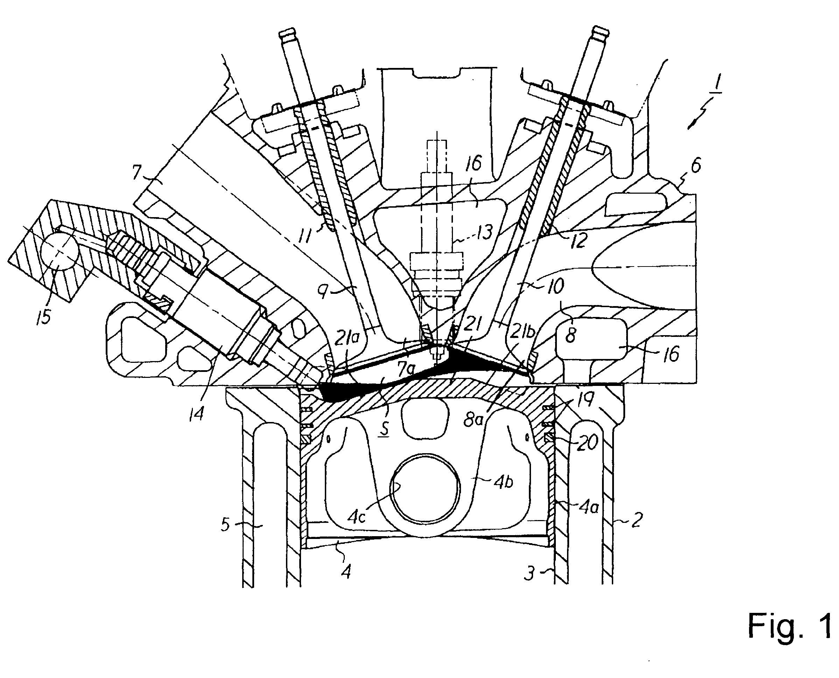

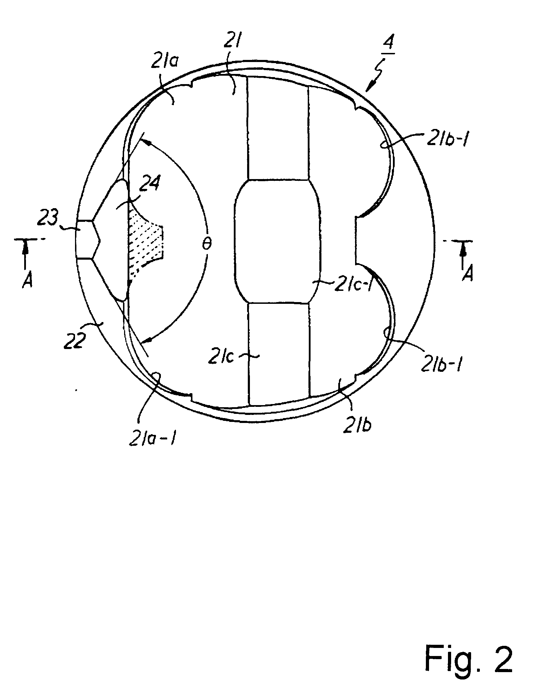

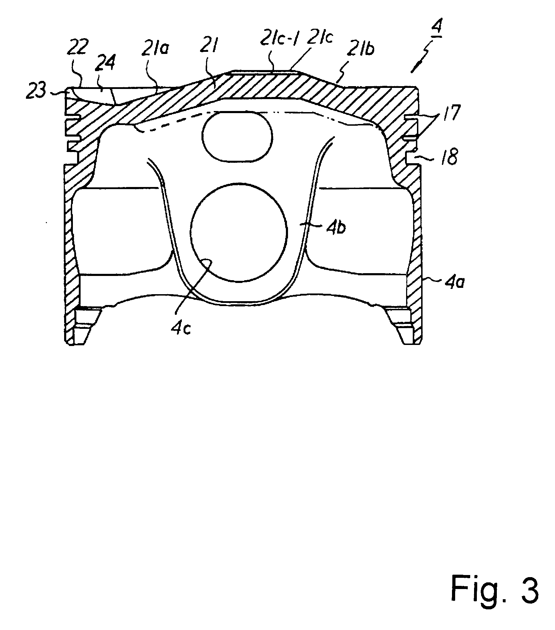

Fig. 1 is a sectional view of a portion of an in-cylinder injection engine with a piston according to this invention; Fig. 2 is a plan view of the piston according to this invention; and Fig. 3 is a sectional view taken along line A-A of Fig. 2.

An in-cylinder injection engine 1 shown in Fig. 1 is of a water-cooled four-stroke type, whose cylinder block 2 is formed with a cylinder 3 and in the cylinder 3 is fitted a piston 4 according to this invention for vertical sliding movement. The piston 4 is connected to a crankshaft (not shown) through a connecting rod (not shown), and vertical reciprocal linear movement of the piston 4 in the cylinder 3 is converted into rotational movement of the crankshaft by the connecting rod. The cylinder block 2 is formed with a water jacket 5 around the cylinder 3.

On the upper surface of the cylinder block 2 is mounted a cylinder head 6, and in the cylinder head 6 are formed two intake passages 7 and two exhaust passages 8 (in Fig. 1 are shown one intake and one exhaust passage only), and one pent roof type combustion chamber S. Intake ports 7a and exhaust ports 8a at which respective two intake and two exhaust passages are open to the combustion chamber S, are opened at appropriate timings by two intake valves 9 and two exhaust valves 10 (in Fig. 1 are shown one intake and one exhaust valve only) driven by a valve drive mechanism, respectively, allowing a required gas exchange in the cylinder 3. The intake valves 9 and exhaust valves 10 are held for sliding movement in valve guides 11, 12 press-fitted in the cylinder head 6, and biased in the direction of valve closing by valve springs (not shown), so as to be opened and closed at appropriate timings, respectively, when an intake and an exhaust cam shaft (not shown) are driven for rotation by part of engine power.

In addition, at the top of the cylinder head 6 is mounted an ignition plug 13, and the electrode of the ignition plug 13 faces the central top portion of the combustion chamber S. Downwardly of the intake passages 7 and between the two intake valves 9 is mounted obliquely an injector 14, and fuel supplied from a fuel passage 15 is injected from injector 14 directly into the cylinder 3 at an appropriate timing for combustion in the combustion chamber S. The cylinder head 6 is formed with water jackets 16 around the intake passages and the exhaust passages.

Now, referring to Fig. 2 and Fig. 3, the construction of the piston 4 according to a preferred embodiment will be described in detail.

The piston 4 is made of a light weight aluminum alloy by monobloc casting, and at opposite locations inside a cylindrical skirt section 4a are formed integrally a pair of pin bosses 4b (in Fig. 3 is shown one boss only). The pin bosses are formed with round holes 4c, and the small end of the connecting rod (not shown) is connected to the piston 4 by a piston pin (not shown) fitted in the round holes 4c formed in the bosses 4b.

In the outside circumferential surface of the piston 4 above its skirt section 4a are formed three ring grooves 17, 18 vertically in tiers, and in the ring grooves 17, 18 are fitted piston rings 19, 20, respectively (see Fig. 1).

At the top of the piston 4 according to an embodiment is formed integrally a mountain-shaped portion 21 oriented parallel to the ceiling of the pent roof type combustion chamber S; on the mountain-shaped portion 21 are formed a flat intake side slope 21a facing the intake valves 9 (see Fig. 1) and a flat exhaust side slope 21b facing the exhaust valves 10 (see Fig. 1); and at a portion where both slopes 21a, 21b meet, is formed an approximately flat surface 21c.

The angle of the intake side slope 21a of the mountain-shaped portion 21 is set such that its extended plane crosses the faces of the exhaust valves 10 when the piston 4 is at the top dead center (see Fig. 1), and the inclination of the exhaust side slope 21b (angle to the horizontal surface) is set greater than that of the intake side slope 21a, so that the area of the intake side slope 21a is greater than that of the exhaust side slope 21b. In addition, as shown in Fig. 2, the intake side slope 21a is formed with a recess for avoiding interference with the two intake valves 9, or a valve recess 21a-1, and similarly the exhaust side slope 21b is formed with two semi-circular valve recesses for avoiding interference with the two exhaust valves 10.

Although in the past, two independent valve recesses similar to the two exhaust side valve recesses have been formed also on the intake side of the top surface of the piston, two intake side recesses are connected by a tangent line in this embodiment (that is, the hatched portion of Fig. 2 is removed), so that one valve recess 21a-1 common to the two intake valves is formed on the intake side.

In the middle of the flat surface 21c of the mountain-shaped portion 21 (centrally of the parallelly disposed intake and exhaust valves) is formed a planar recess 21c-1 for avoiding interference with the ignition plug 13, and at the outer edge of the central portion (midpoint between two intake valves 9) of the intake side section (intake side squish) in a squish area 22 formed on the periphery of the top of the piston 4, is formed a recess 23 for avoiding interference with the tip of the injector 14. In the intake side squish area 22 is formed a recessed groove-like spray guide 24 adjoining the recess 23, and the spray guide 24 expands in width toward the intake side slope 21a of the mountain-shaped portion 21, as shown in Fig. 2, the expanded angle θ being set at 120°. The expanded angle θ may be set at an optimum value in response to the injection angle of the fuel.

In the in-cylinder injection engine 1 according to the embodiment as described above, a mountain-shaped portion 21 is formed integrally at the top of the piston 4, therefore the volume of the combustion chamber S can be decreased without need of changing the configuration of the cylinder head 6, effecting an increased compression ratio and a higher output without difficulty in layout.

Although fuel injection into the cylinder 3 by the injector 14 is performed during the time from the end of the exhaust stroke to the latter half of the intake stroke (at the crank angle ranging from BTDC 380° to 250° at engine speed of 7200 rpm), fuel injected from the injector 14 is diffused along the intake side slope 21a of the mountain-shaped portion 21 of the piston 4, which facilitates evaporation of the fuel, preventing smoke generation.

Fig. 1 shows the state of fuel injection at the beginning (engine speed of 7200 rpm) of the intake stroke when the piston 4 is at the top dead center. As described above, since the angle of the intake side slope 21a of the mountain-shaped portion 21 formed at the top of the piston 4 is set such that its extended plane crosses the faces of the exhaust valves 10, fuel injected from the injector 14 hits directly on the exhaust valve faces along the intake side slope 21a of the mountain-shaped portion of the top of the piston 4, as shown in the figure. Therefore, the fuel is heated by the hot faces of the exhaust valves 10, facilitating its evaporation, and the exhaust valves 10 are cooled down by the fuel, improving reliability of the in-cylinder injection engine 1. In addition, fuel injected from the injector 14 strikes first against the intake side slope 21a of the mountain-shaped portion of the top of the piston 4 to thereby cool down the intake side of the piston 4, so that progress of detonation to the intake side is restricted, increasing knocking limit.

Further, two intake side valve recesses are connected by a tangent line as described above (that is, the hatched portion of Fig. 2 is removed), so that fuel injected from the injector 14 is diffused smoothly without hindrance by the hatched portion shown in Fig. 2.

Furthermore, fuel injected from the injector 14 expands toward the intake side slope 21a of the mountain-shaped portion 21 along the spray guide 24 formed in an intake side squish area 22 at the top of the piston 4, so that the fuel is diffused more smoothly, facilitating fuel evaporation and preventing smoke generation more reliably.

As is clear from the foregoing description, a piston for an in-cylinder injection engine in which intake valves and exhaust valves are provided in a cylinder head and fuel is injected directly into a cylinder from an injector mounted to the cylinder head, is formed integrally, at its top, with a mountain-shaped portion having an intake side slope facing the intake valves and an exhaust side slope facing the exhaust valves. Therefore, the compression ratio of the in-cylinder injection engine can be increased and a higher output can be effected without difficulty in layout and smoke generation.

## Claims

1. An internal combustion engine comprising a cylinder, a piston slidable in said cylinder and a cylinder head having at least one intake valve, at least one exhaust valve and an injector, wherein said injector is adapted to inject fuel directly into a combustion chamber defined by the cylinder, the piston and the cylinder head, **characterized by** a mountain-shaped portion (21) formed integrally at a top of said piston (4), wherein said mountain-shaped portion (21) comprises an intake side slope (21a) facing said intake valve (9) and an exhaust side slope (21b) facing said exhaust valve (10).

2. An internal combustion engine according to claim 1, **characterized by** two or three intake valves (9) respectively arranged in intake passages (7) and/or two exhaust valves (10) respectively arranged in exhaust passages (8).

3. An internal combustion engine according to claim 2, **characterized in that** the injector (14) is obliquely arranged on the intake side downwardly of the intake passages (7) and between the two intake valves (9).

4. An internal combustion engine according to at least one of the preceding claims 1 to 3, **characterized in that** the intake side slope (21a) and/or the exhaust side slope (21b) are substantially flat.

5. An internal combustion engine according to at least one of the preceding claims 1 to 4, **characterized by** an substantially flat surface (21c) arranged in an abutting area between the intake side slope (21a) and the exhaust side slope (21b), wherein a planar recess (21c-1) is formed in a middle of the flat surface (21c) for avoiding interference with an ignition plug (13).

6. An internal combustion engine according to at least one of the preceding claims 2 to 5, **characterized in that** an angle of the intake side slope (21a) of said mountain-shaped portion (21) is set such that its extended plane crosses the faces of said exhaust valves (10) when the piston (4) is at its top dead center so that fuel injected from the injector (14) mounted on the intake side will hit directly on said exhaust valve faces along the intake side slope (21a) of said mountain-shaped portion (21).

7. An internal combustion engine according to at least one of the preceding claims 1 to 6, **characterized in that** an inclination of the exhaust side slope (21b) is set greater that an inclination of the intake side slope (21a), wherein an area of the intake side slope (21a) is greater than an area of the exhaust side slope (21b).

8. An internal combustion engine according to at least one of the preceding claims 2 to 7, **characterized by** a common recess (21a-1) for the intake valves (9) arranged in the intake side slope (21a) for avoiding interference with the intake valves (9), wherein said common recess (21a-1) is arranged in the intake side slope (21a) of said mountain-shaped portion (21).

9. An internal combustion engine according to claim 8, **characterized in that** said common valve recess (21a-1) for the intake valves (9) is formed by connecting a plurality of valve recesses for the respective intake valves (9) which are formed in the intake side slope (21a) of said mountain-shaped portion (21) by a tangent line.

10. An internal combustion engine according to at least one of the preceding claims 1 to 9, **characterized by** a spray guide (24) of a recessed groove-like shape, wherein said spray guide (24) expands in width towards the intake side slope (21a) of said mountain-shaped portion (21) and is formed in an intake side squish area (22).

11. An internal combustion engine according to claim 10, **characterized in that** an expanding angle θ of the spray guide (24) is set to an optimum value in response to the injection angle of the fuel, in particular 120°.

12. A piston for an internal combustion engine in which intake valves and exhaust valves are provided in a cylinder head and fuel is injected directly into a cylinder by an injector mounted to the cylinder head, **characterized in that** at a top of said piston is formed integrally a mountain-shaped portion (21) with an intake side slope (21a) facing said intake valves (9) and an exhaust side slope (21b) facing said exhaust valves (10).

13. The piston for an internal combustion engine according to claim 12, **characterized in that** an angle of the intake side slope (21a) of said mountain-shaped portion (21) is set such that its extended plane crosses the faces of said exhaust valves (10) when the piston is at its top dead center so that fuel injected from the injector (14) mounted on the intake side will hit directly on said exhaust valve faces along the intake side slope (21a) of said mountain-shaped portion (21).

14. The piston for an internal combustion engine according to claim 12 or 13 , **characterized in that** a plurality of valve recesses formed in the intake side slope (21a) of said mountain-shaped portion (21) are connected by a tangent line to form a common intake valve recess (21a-1).

15. The piston for an internal combustion engine according to at least one of the preceding claims 12 to 14, **characterized in that** in an intake side squish area (22) is formed a spray guide (24) of a recessed groove-like shape expanding in width toward the intake side slope (21a) of said mountain-shaped portion (21).
